# EUROPEAN PATENT APPLICATION

(11) **EP 4 851 535 A1**
(43) Date of publication of application: **09.12.2026**
(21) Application number: 25181236.8
(22) Date of filing: 06.06.2025
(51) Int. Cl.: F24C 15/20

(54) **GREASE FILTER DEVICE FOR USE IN A KITCHEN APPLIANCE AND KITCHEN APPLIANCE HAVING SUCH GREASE FILTER DEVICE**

(71) Applicant: ELECTROLUX APPLIANCES AKTIEBOLAG, 105 45 Stockholm (SE)
(72) Inventor: SPECIALE, Michele, 60043 Cerreto (IT)
(74) Representative: Electrolux Group Patents

(57) **Abstract**

Grease filter device (1) for use in a kitchen appliance, comprising a layered filter arrangement (2), and a first cover layer (3) for covering the filter arrangement (2), wherein the filter arrangement (2) comprises at least two metal filter layers (6, 7) and at least one plastic filter layer (10).

## Description

The present invention refers to a grease filter device for use in a kitchen appliance, in particilar a hood appliance or a cooking hob appliance, preferably with a downdraft extraction device, and a kitchen appliance having such grease filter device. Kitchen appliances, such as hood appliances or cooking hob appliances, in the sense of the present invention are preferably used at cooking places in kitchens for extracting cooking vapors by suction. When flowing through the kitchen appliance, the cooking vapors are filtered whereby in particular grease is filtered from the cooking vapors.

In prior art grease filter devices, several aluminum layers are arranged in a layered filter arrangement to extract grease from the cooking vapors. It has been found that increasing the number of aluminum layers to more than 10 does not increase the grease absorption capability but causes a decrease of air or cooking vapor flow and an increase of noise with regard to prior art grease filter devices.

It is therefore the object of the present invention to provide a grease filter device for use in a kitchen appliance and a kitchen appliance having such grease filter device that increase the grease absorption capability while at the same time not significantly decreasing the air or cooking vapor flow through the grease filter device and not significantly increasing the noise level while air or cooking vapors are flowing through the grease filter device.

This object is achieved by a grease filter device having the features of claim 1 and a kitchen appliance having the features of claim 15. Further features of the present invention are set force in the dependent claims.

The present invention proposes a grease filter device for use in a kitchen appliance, preferably at cooking places in kitchens. The grease filter device comprises a layered filter arrangement and a first cover layer for covering the filter arrangement. According to the present invention, the layered filter arrangement comprises at least two metal filter layers and at least one plastic filter layer.

Use of the term "first" in the language "first cover layer" does not mean that it is mandatory for the grease filter device according to the present invention to have a second cover layer. The grease filter device in the sense of the present invention may have one single cover layer only.

It has been found that replacing at least one metal filter layer known in prior art grease filter devices by a plastic filter layer has the advantage of increasing the grease absorption capability without significantly decreasing air or cooking vapor flow through the grease filter device and without increasing the noise level when air or cooking vapors flow through the grease filter device.

A further advantage results from the fact that the plastic filter layer may be manufactured in the same manner as known metal filter layers. For example, the plastic filter layer in the sense of the present invention may be cut and expanded as known metal filter layers and then added to the layered filter arrangement like a known metal filter layer. Thus, the plastic filter layer may be fitted into the layered filter arrangement like a metal filter layer so that the layered filter arrangement can be assembled without significant modifications of production lines in the same manner as known layered filter arrangements having metal filter layers only.

In addition, since the plastic filter layer may be configured to be machine-washable, it is advantageous that the complete grease filter device according to the present invention as a whole may be washed in a washing machine like prior art grease filter devices having machine-washable metal filter layers only.

The first cover layer and the layered filter arrangement may be fixed together along their edge portions by fastening means like pins, rivets or the like, thereby avoiding the necessity of a frame. Alternatively, at least the first cover layer may be held in a surrounding frame as known from prior art grease filters. Also, the layered filter arrangement may be held by that surrounding frame. Instead of being directly held by the frame, the layered filter arrangement may be mounted to the first cover layer being held by the frame.

Preferably, the plastic filter layer is arranged between the at least two metal filter layers. It has been found to be advantageous in terms of increasing the grease absorption capability that the cooking vapors first have to flow through a metal filter layer before coming into contact with the plastic filter layer.

It is highly advantageous that the plastic filter layer comprises a polyester filter layer. In further advantageous manner, the plastic filter layer may be completely made from polyester.

The polyester filter layer preferably has a thickness of 1.0 mm to 1.5 mm, especially a thickness of 1.3 mm. It is further preferred that the polyester filter layer has an area density of 80 g/m² to 120 g/m², especially an area density of 100 g/m². It is moreover preferred that the polyester filter layer has a permeability of 30 hl/m²s to 50 hl/m²s, especially a permeability of 40 hl/m²s.

In an advantageous manner, at least one of the at least two metal filter layers comprises, preferably consists of, an aluminum layer. More preferred, all of the metal filter layers included in the layered filter arrangement comprise, preferably consist of, aluminum layers.

In an advantageous manner, at least one of the at least two metal filter layers comprises, preferably consists of, an expanded metal layer. More preferred, each of the metal layers included in the layered filter arrangement comprises, preferably consists of, an expanded metal layer. Especially, one, several or all metal filter layers included in the layered filter arrangement may comprise, preferably consist of, an expanded aluminum layer respectively.

It is advantageous that the at least one plastic filter layer comprises, preferably consists of, an expanded plastic layer, especially an expanded polyester layer. A combination of an expanded plastic filter layer with expanded metal filter layers in the layered filter arrangement allows to manufacture all involved filter layers regardless of their kind in the same cutting and expanding production line.

In preferred manner, the layered filter arrangement may comprise an even number of more than two metal filter layers and half of the number of metal filter layers is arranged on each side of the plastic filter layer. In this way, the plastic filter layer is exactly located in the middle of the layer composition of the filter arrangement.

Preferably the first cover layer is arranged on the filter arrangement such that it is visible when the grease filter device is mounted in the kitchen appliance and a user looks into the kitchen appliance in a direction in which the cooking vapors are sucked into the same. This allows in advantageous manner to provide the first cover layer with a focus on an appealing design rather than on a functional design as the one of the metal filter layers or of the plastic filter layer. A functional design fulfilling the needs of a good grease absorption is frequently detrimental to an aesthetically appealing design.

The first cover layer preferably comprises, preferably consists of, a perforated metal layer. The perforation may be designed to be both appealing in optics and functional only in terms of flow of air or cooking vapors through it. It is further preferred that the first cover layer comprises, preferably consists of, an aluminum layer. Especially, the first cover layer may comprise, preferably consists of, a perforated aluminum layer.

The grease filter device according to the present invention may also comprise a second cover layer for covering the lateral filter arrangement in addition to the first cover layer. The second cover layer may be arranged on the filter arrangement such that it is not visible when the grease filter device is mounted in the kitchen appliance. The second cover layer may also be provided with an appealing design like the first cover layer because a user having removed the grease filter device from the kitchen appliance may see the grease filter device from both sides.

In preferred manner the second cover layer comprises, preferably consists of, a perforated metal layer. The second cover layer may also comprise, preferably consists of, an aluminum layer. It is further preferred that the second cover layer comprises, preferably consists of, a perforated aluminum layer.

The present invention further proposes a kitchen appliance, in particular a hood appliance or a cooking hob appliance, preferably with an integrated downdraft extraction device, further preferably for use at cooking places in kitchens, having a grease filter device according to the present invention. A cooking hob appliance with a downdraft extraction device may be also referred to as combo hob as it combines a cooking hob, such as an induction hob, with an integrated extraction device.

In the following an embodiment of the grease filter device according to the present invention is described in exemplary manner by referring to the attached drawings, in which:
- Fig. 1: shows a perspective view of an embodiment of a grease filter device according to the present invention;
- Fig. 2: shows a composition of the layer structure of the grease filter device shown in Fig. 1 in expanded presentation;
- Fig. 3: shows a front view of the grease filter device shown in Fig. 1;
- Fig. 4: shows a side view of the grease filter device shown in Fig. 3 from the left; and
- Fig. 5: shows an enlarged view of detail A shown in Fig. 4.

Identical reference signs in different drawings refer to identical elements or parts of the shown embodiment.

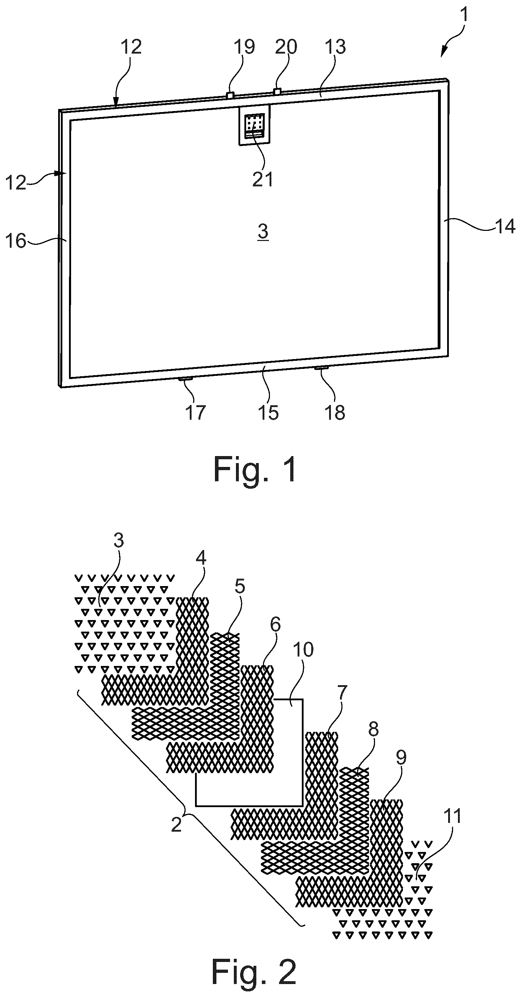

Fig. 1 shows a perspective view of a grease filter device 1 according to the present invention. It is suitable for use in a kitchen appliance (not shown), in particular a hood appliance. In addition or as an alternative the grease filter device 1 may be also used in a cooking hob appliance with an integrated downdraft extraction device. The grease filter device 1 comprises a frame 12 having four circumferential frame profiles 13, 14, 15 and 16.

The grease filter device 1 may be mounted to a suction opening of the kitchen appliance, such as the hood appliance or the cooking hob appliance (not shown), through which cooking vapors are sucked in. For this purpose, in the present embodiment lower frame profile 15 has two projections 17 and 18 for engaging suitable holding means at the end of the kitchen appliance. Upper frame profile 13 has two pins 19 and 20 which may be retracted from their extended position, as shown in Fig. 1, to their retracted position in which they are partly or fully retracted into upper frame profile 13. The retracting movement may be applied by pushing sliding knob 21 in Fig. 1 against the action of a biasing spring (not shown) downwards. In their retracted positions, pins 19 and 20 may engage suitable locking means at the end of the kitchen appliance.

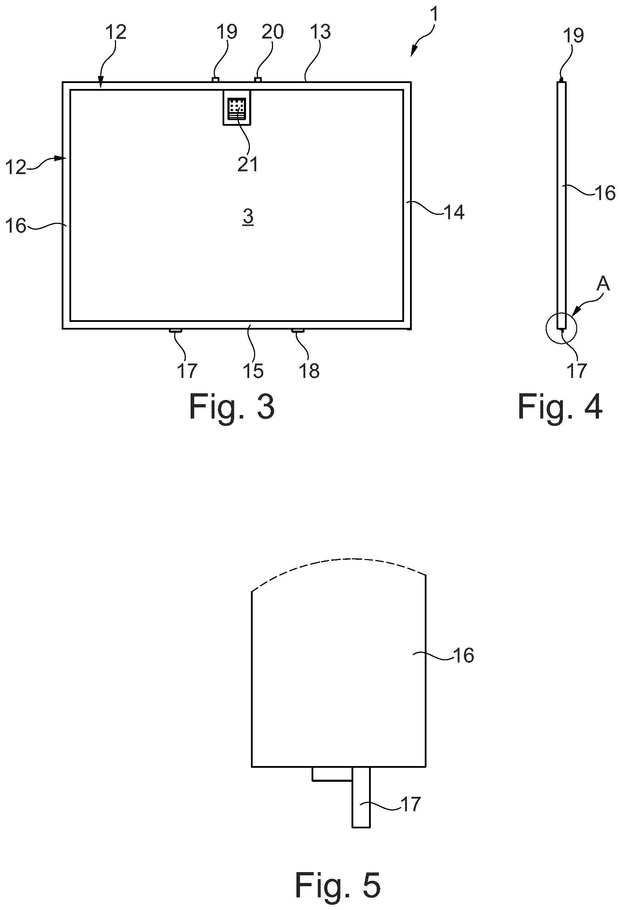

The frame 12, the frame profiles 13, 14, 15 and 16, the projections 17, 18, the pins 19, 20 and the sliding knob 21 may also be seen in Fig. 3, 4 and 5. These components are well known to the skilled person from prior art grease filter devices for kitchen use.

In the embodiment as shown in Fig. 2, frame 12 carries a first cover layer 3, a second cover layer 11 and a layered filter arrangement 2 located in the space between the first cover layer 3 and the second cover layer 11. Each of the first cover layer 3 and the second cover layer 11 is a perforated metal layer made of aluminum and having triangular holes as shown in Fig. 2. The first and second cover layers 3, 11 represent visible surfaces that both can be seen at least when a user has disassembled the grease filter device 1 from the kitchen appliance. Therefore, first and second cover layers 3, 11 may be designed to have appealing visible surfaces.

In the embodiment as shown, the layered filter arrangement 2 consists of a total number of seven filter layers, namely first metal filter layer 4, second metal filter layer 5, third metal filter layer 6, plastic filter layer 10, fourth metal filter layer 7, fifth metal filter layer 8 and sixth metal filter layer 9, as can be seen in Fig. 2.

In the embodiment according to Fig. 2, metal filter layers 4, 5, 6 and 7, 8, 9 are designed as expanded aluminum layers. Each of them has a plurality of longitudinal cuts that were expanded perpendicularly to the longitudinal direction of the cuts. As can be seen in Fig. 2, the longitudinal cut directions of neighbored metal filter layers 4, 5, 6 and 7, 8, 9 alternately extend in vertical and horizontal direction.

Plastic filter layer 10 is located exactly in the middle of metal filter layers 4, 5, 6 and 7, 8, 9 and is shown in Fig. 2 in a neutral white design just for illustrative purposes. Plastic filter layer 10 may be manufactured by any suitable manufacturing process that allows a sufficient number of holes and channels through which air or cooking vapors may flow. It is highly preferable to provide the plastic filter layer 10 as an expanded plastic layer completely made from polyester, although other plastics and other manufacturing processes may be feasible within the scope of the present invention. Polyester as the material for the plastic filter layer 10 has been found to achieve very good grease absorption results.

Further, manufacturing the plastic filter layer 10 in the same way as metal filter layers 4, 5, 6 and 7, 8, 9, for example cutting a plurality of longitudinal cuts into the plastic, preferably polyester, and then expanding it perpendicularly to the longitudinal direction of the cuts has been found to be highly advantageous because the manufacturing process is feasible with current filter manufacturing tools for manufacturing expanded aluminum layers in the prior art. Thus, the plastic filter layer 10, preferably polyester layer, can be additionally manufactured without significant modifications of present production lines. The plastic filter layer 10, preferably polyester layer, may be cut as the other expanded aluminum layers 4, 5, 6, 7, 8, 9 and added as a further layer in filter arrangement 2.

In the layered filter arrangement 2, as shown in Fig. 2, plastic filter layer 10 may be provided as an expanded polyester layer having cuts with a longitudinal direction that extends horizontally. As shown in Fig. 2, all filter layers 4, 5, 6, 10, 7, 8, and 9 of layered filter arrangement 2 then alternately extend with their longitudinal cuts in vertical and horizontal direction, respectively.

It is noted that in the embodiment as shown the layered filter arrangement 2 comprises six metal filter layers 4, 5, 6, 7, 8, 9, i. e. expanded aluminum layers, and has three metal filter layers 4, 5, 6 on one hand and three metal filter layers 7, 8, 9 on the other hand arranged on each side of plastic filter layer 10, i. e. the expanded polyester layer.

It is, of course, feasible within the scope of the present invention to arrange plastic filter layer 10 at any other place within the composition of layered filter arrangement 2. For example, the plastic filter layer 10 may be arranged at the second or fifth place of filter arrangement 2 counted from first cover layer 3. Also, it is alternatively possible to arrange more than one plastic filter layer 10 in layered filter arrangement 2, for example, a first plastic filter layer 10 at the second place and a second plastic layer 10 at the fifth place of filter arrangement 2 counted from first cover layer 3.

### List of reference signs

| | |
|---|---|
| 1 | Grease filter device |
| 2 | Layered filter arrangement |
| 3 | First cover layer |
| 4 | First metal filter layer |
| 5 | First metal filter layer |
| 6 | First metal filter layer |
| 7 | First metal filter layer |
| 8 | First metal filter layer |
| 9 | First metal filter layer |
| 10 | Plastic filter layer |
| 11 | Second cover layer |
| 12 | Frame |
| 13 | Frame profile |
| 14 | Frame profile |
| 15 | Frame profile |
| 16 | Frame profile |
| 17 | Projection |
| 18 | Projection |
| 19 | Pin |
| 20 | Pin |
| 21 | Sliding knob |

## Claims

1. Grease filter device (1) for use in a kitchen appliance, in particular a hood appliance or a cooking hob appliance, the grease filter device (1) comprising
• a layered filter arrangement (2), and
• a first cover layer (3) for covering the filter arrangement (2),
**characterized in that**
the filter arrangement (2) comprises at least two metal filter layers (6, 7) and at least one plastic filter layer (10).

2. Grease filter device (1) according to claim 1, wherein the plastic filter layer (10) is arranged between the metal filter layers (6, 7).

3. Grease filter device (1) according to one of the preceding claims, wherein
the plastic filter layer (10) comprises a polyester filter layer, preferably completely made from polyester.

4. Grease filter device (1) according to claim 3, wherein the polyester filter layer has a thickness of 1,0 mm to 1,5 mm, especially of 1,3 mm, and/or an area density of 80 g/m² to 120 g/m², especially of 100 g/m², and/or a permeability of 30 hl/m²s to 50 hl/m²s, especially 40 hl/m²s.

5. Grease filter device (1) according to one of the preceding claims, wherein
at least one of the metal filter layers (6, 7) comprises an aluminum layer.

6. Grease filter device (1) according to one of the preceding claims, wherein
at least one of the metal filter layers (6, 7) comprises an expanded metal layer.

7. Grease filter device (1) according to one of the preceding claims, wherein
the plastic filter layer (10) comprises an expanded plastic layer.

8. Grease filter device (1) according to one of the preceding claims, wherein
the filter arrangement (2) comprises an even number of more than two metal filter layers (4, 5, 6, 7, 8, 9) and half of the number of metal filter layers (4, 5, 6; 7, 8, 9) is arranged on each side of the plastic filter layer (10).

9. Grease filter device (1) according to one of the preceding claims, wherein
the first cover layer (3) is arranged on the filter arrangement (2) such that it is visible when the grease filter device (1) is mounted in the kitchen appliance.

10. Grease filter device (1) according to one of the preceding claims, wherein
the first cover layer (3) comprises a perforated metal layer.

11. Grease filter device (1) according to one of the preceding claims, wherein
the first cover layer (3) comprises an aluminum layer.

12. Grease filter device (1) according to one of the preceding claims, wherein
it comprises a second cover layer (11) for covering the filter arrangement (2), the second cover layer (11) being arranged on the filter arrangement (2) such that it is not visible when the grease filter device (1) is mounted in the kitchen appliance.

13. Grease filter device (1) according to claim 12, wherein the second cover layer (11) comprises a perforated metal layer.

14. Grease filter device (1) according to claim 12 or 13, wherein
the second cover layer (11) comprises an aluminum layer.

15. Kitchen appliance, in particular hood appliance or cooking hob appliance, having a grease filter device (1) according to one of the preceding claims.
